# EUROPÄISCHE PATENTSCHRIFT

(11) **EP 3 940 281 B1**
(45) Veröffentlichungstag und Bekanntmachung des Hinweises auf die Patenterteilung: **30.08.2023**
(21) Anmeldenummer: 21172807.6
(22) Anmeldetag: 07.05.2021
(51) Int. Cl.: F16L 21/03, F16L 51/00

(54) **ROHRMUFFE**
PIPE SLEEVE
MANCHON DE TUYAU

(30) Priorität: 17.07.2020 DE 102020119002
(43) Veröffentlichungstag der Anmeldung: 19.01.2022
(73) Patentinhaber: Poloplast GmbH & Co. KG, 4060 Leonding (AT)
(72) Erfinder: MAYRBÄURL, Erwin, 4481 Asten (AT); HEINDL, Andreas, 4030 Linz (AT)
(74) Vertreter: Hoefer & Partner Patentanwälte mbB

(56) Entgegenhaltungen:
- EP-A1- 3 339 704
- WO-A1-2009/024787
- DE-A1-102018 131 750
- GB-A- 1 201 581
- US-A1- 2013 093 181

## Beschreibung

Die Erfindung betrifft eine Rohrmuffe. Die Rohrmuffe ist insbesondere Bestandteil einer drucklosen Rohranordnung, beispielsweise einer Abflussrohranordnung.

Eine Rohrmuffe ist beispielsweise aus DE 10 2004 038 811 B3 bekannt. Die hier offenbarte Rohrmuffe zeigt einen zylindrischen Hohlraum, in den ein ringförmiges Dichtmittel der Rohrmuffe ragt. In diesen Hohlraum kann ein Rohr eingesteckt werden.

In der Regel ist bei Rohranordnungen eine Längenausdehnung aufgrund thermischer Erwärmung zu berücksichtigen. Beim Durchleiten von heißem Fluid dehnt sich nämlich das Material der Rohranordnung aus. Um der Rohranordnung die Möglichkeit zu einer Längenausdehnung zu ermöglichen, ist es erforderlich, das eingesteckte Rohr in der Regel ein Stück aus der Muffe herauszuziehen, sodass genügend Freiraum für die Längenausdehnung gegeben ist. EP 3 339 704 A1 zeigt hierzu ein Verfahren, bei welchem auf ein Spitzende nach dem vollständigen Einstecken in die Muffe an seiner Außenoberfläche eine Längenmarkierung aufgebracht wird, um in Folge sicherzustellen, dass das Rohrende genügend weit aus der Rohrmuffe zurückgezogen wird.

DE 10 2018 131 750 A1 beschreibt ein Steckmuffensystem, welches ein wasserlösliches Abstandselement am Muffengrund beinhaltet, welches sich im Betrieb durch das durchfließende Wasser auflöst und dadurch den erforderlichen Freiraum für eine Längenausdehnung des Rohrsystems freigibt. Ein Nachteil dieser Lösungsvariante besteht darin, dass das System nur bei der Erstinstallation angewendet werden kann, im Reparaturfall jedoch nicht mehr funktioniert. Ebenso ist Wasser als Fluid für die Leitung erforderlich, für eine gasführende Leitung wie sie etwas in der Lüftungstechnik Anwendung finden, kann das System ebensowenig eingesetzt werden.

DE 10 2018 122 732 A1 betrifft eine Anschlussvorrichtung für Rohrleitungen mit einem Anschlusskörper mit einer Aufnahmeöffnung für eine mit einem Leitungsende in eine Einsteckrichtung einzusteckende Rohrleitung. Innerhalb der Aufnahmeöffnung ist eine Stützhülse derart koaxial angeordnet, dass das Leitungsende beim Einstecken mittels einer Montagekraft auf eine zylindrische Außenfläche der Stützhülse aufschiebbar ist. Die Stützhülse weist mindestens einen Vorsprung auf, der ein haptisches Signal in Form einer sprungartigen Erhöhung des Einsteckwiderstandes abhängig einer Einstecktiefe des Leitungsendes erzeugt. Die Verwendung der Stützhülse schränkt dabei den Durchflussquerschnitt ein.

WO 2009/024787 A1 zeigt eine Rohrmuffe nach dem Oberbegriff des Anspruchs 1.

Es ist daher Aufgabe vorliegender Erfindung, eine Rohrmuffe anzugeben, die eine einfache Montage, eine dichte Verbindung unabhängig vom eingesetzten Fluid und auch einen mehrmaligen Einsatz der Bauteile auch bei Auftreten thermischer Ausdehnung ermöglicht.

Die Lösung der Aufgabe erfolgt durch die Merkmale des Anspruchs 1. Die abhängigen Ansprüche haben weitere Ausgestaltungen der Erfindung zum Gegenstand.

Die Erfindung zeigt eine Rohrmuffe. Die Rohrmuffe ist insbesondere Bestandteil einer drucklosen Rohranordnung. Insbesondere handelt es sich dabei um eine Abwasserrohranordnung. Die Rohranordnung umfasst neben der hier vorgestellten Rohrmuffe ein Rohr, das mit seinem Spitzende voraus in die Rohrmuffe einsteckbar ist. Die Längsachse der Rohrmuffe wird als Rohrmuffenachse bezeichnet. Die im Wesentlichen dazu koaxiale Längsachse des Rohrs wird als Rohrachse bezeichnet.

Es handelt sich insbesondere um eine Steckmuffe, sodass das Rohr lediglich in die Muffe eingesteckt wird. Insbesondere ist keine Verschraubung oder sonstige Verbindung zwischen Rohr und Rohrmuffe vorgesehen.

Die Rohrmuffe weist einen Grundkörper auf, der einen zylindrischen Hohlraum bildet. Der Grundkörper ist insbesondere aus steifem Material, insbesondere Kunststoff, gefertigt. Wie noch im Detail beschrieben wird, kann der Grundkörper mehrere Ringe umfassen, die elastisch miteinander verbunden sind.

Vorzugsweise sind am Grundkörper ein Muffenbereich, ein Rohrbereich und ein zwischen Muffenbereich und Rohrbereich liegender Verjüngungsbereich definiert. Der Muffenbereich mit dem größten Innendurchmesser geht über den Verjüngungsbereich in den Rohrbereich über.

Ferner umfasst die Rohrmuffe ein ringförmiges Dichtmittel, das vom Grundkörper in den Hohlraum ragt. Insbesondere weist der Muffenbereich der Rohrmuffe eine Einstecköffnung auf, und das Dichtmittel befindet sich relativ nah an dieser Einstecköffnung. Das Dichtmittel kann zum Beispiel in einer Sicke der Rohrmuffe angeordnet sein oder als integraler Bestandteil der Rohrmuffe gefertigt sein.

Über die Einstecköffnung wird das Spitzende des Rohrs in die Rohrmuffe eingesteckt und durchdringt dabei das ringförmige Dichtmittel. Dadurch liegt das ringförmige Dichtmittel am Außenumfang des Rohres an und dichtet den Spalt zwischen Rohrmuffe und Rohr. Der Außenumfang des Rohres ist dabei geringfügig kleiner als der Innenumfang der Rohrmuffe im Muffenbereich, sodass das Einstecken des Rohres in die Rohrmuffe möglich ist.

Die Rohrmuffe kann auch mehrere ringförmige Dichtmittel umfassen, die in Axialrichtung versetzt angeordnet sind. Entsprechend wird dann das Spitzende durch alle Dichtmittel hindurch gesteckt.

Bei einer herkömmlichen Rohrmuffe ist das Rohr so weit in die Rohrmuffe einsteckbar, bis es beispielsweise am Verjüngungsbereich ansteht. Bei einer Längenausdehnung, beispielsweise aufgrund thermischer Belastung, kann sich die Anordnung aus Rohrmuffe und Rohr daher nicht ausdehnen und es kann zu einer Beschädigung der Rohranordnung kommen. Deshalb sieht die hier vorgestellte Rohrmuffe einen Anschlag mit zumindest einem elastischen Anschlagselement vor.

Insbesondere werden mehrere am Umfang verteilte Anschlagselemente verwendet. Diese befinden sich vorzugsweise alle auf der gleichen Höhe, sodass sie gemeinsam den Anschlag bilden und das Spitzende des eingesteckten Rohrs gleichzeitig an allen Anschlagselementen anliegt. Vorzugsweise umfasst der Anschlag zwei bis 20 Anschlagselemente.

Der Einfachheit halber wird zum Teil nur die Ausgestaltung eines Anschlagselementes beschrieben. Stets ist aber vorgesehen, dass die Rohrmuffe bzw. der Anschlag mehrere dieser Anschlagselemente aufweisen kann.

Das elastische Anschlagselement, insbesondere die mehreren Anschlagselemente, ragt/ragen vom Grundkörper aus in den Hohlraum hinein. Die Rohrmuffe ist dabei zum Einstecken des Rohrs durch die Dichtung hindurch bis zum Anliegen am Anschlag ausgebildet. Dementsprechend ist der Anschlag, gebildet durch das zumindest eine Anschlagselement, weiter innen in der Muffe angeordnet als das Dichtmittel. Der Anschlag befindet sich folglich zwischen Dichtmittel und Verjüngungsbereich der Rohrmuffe.

Die im Rahmen der Erfindung gewählten Begriffe "elastisch" und "steif" beziehen sich auf die auftretende Elastizität und elastische Verformung bei der Verwendung der Rohrmuffe, nicht jedoch auf die Tatsache, dass ein steifes Element keinerlei Elastizität im Sinne der klassischen Mechanik aufweisen dürfte.

Das einzelne Anschlagselement ist zu dem hier vorgestellten Zwecke elastisch ausgebildet; kann dabei jedoch Bereiche aufweisen, die steif sind und andere Bereiche aufweisen, die elastisch sind.

Der Anschlag, insbesondere die einzelnen Anschlagselemente, ist/sind derart elastisch ausgebildet, dass im unverformten Zustand eine Einstecktiefe des Rohrs begrenzt wird und im elastisch verformten Zustand die Einstecktiefe nicht begrenzt bzw. die Einstecktiefe freigegeben wird, sodass im elastisch verformten Zustand des Anschlagselements bzw. der Anschlagselemente das Rohr über den Anschlag hinweg weiter in die Rohrmuffe einsteckbar ist.

Folglich ist bevorzugt vorgesehen, dass das jeweilige Anschlagselement durch das einsteckbare Rohr elastisch verformbar ist. Dies wird dadurch erreicht, dass das elastische Anschlagselement vom Grundkörper in den Hohlraum hineinragt und sich somit in dem Bereich befindet, in den auch das Rohr eingesteckt wird. Dabei ist das zumindest eine Anschlagselement ist zur Vorbegrenzung der Einstecktiefe angeordnet und ausgebildet.

Ferner kann die Elastizität des Anschlags wie Folgt beschrieben werden: Beim Einstecken (Montieren) des Rohrs in die Rohrmuffe ist das ringförmige Dichtmittel mit einer axialen Kraft F1 überwindbar. Die Kraft F1 beschreibt dabei die minimal nötige Kraft zum Einstecken des Rohrs und Überwinden des Dichtmittels. Werden mehrere Dichtmittel in der Rohrmuffe verwendet, ist das Dichtmittel mit dem größten Widerstand ausschlaggebend. Der Anschlag ist mit einer axialen Kraft F2 überwindbar. Die Kraft F2 beschreibt die minimal nötige Kraft zum Überwinden des Anschlags. Ist der Anschlag aus mehreren Anschlagselementen gebildet, werden mit der Kraft F2 alle Anschlagselemente gleichzeitig überwunden. Die Rohrmuffe, insbesondere die Kombination aus Rohrmuffe und Rohr, ist vorzugsweise dazu ausgebildet, dass F2 größer als F1 ist; vorzugsweise beträgt F2 zumindest 1,2*F1, besonders vorzugsweise zumindest 2*F2.

Das einzelne Anschlagselement ist vorzugsweise so ausgebildet, dass es mittels axialer Last auf das Anschlagselement radial nach außen elastisch verformbar ist, sodass die Einstecktiefe freigebbar ist. Da der Spalt zwischen Rohr und Rohrmuffe relativ klein ist, ist vorzugsweise vorgesehen, dass das Anschlagselement bzw. die Anschlagselemente bei Überwindung des Anschlags nach außen radial elastisch verformt wird/werden, da für eine Verformung in axialer Richtung aufgrund des kleinen Spaltes relativ wenig Platz zur Verfügung steht.

Das einzelne Anschlagselement ist vorzugsweise einstückig mit dem Grundkörper gefertigt. Unter einstückiger Fertigung ist hier insbesondere zu verstehen, dass die beiden Komponenten, nämlich Anschlagselement und zumindest ein Teil des Grundkörpers, in einem Mehrkomponenten-Spritzgussverfahren aus zwei unterschiedlichen Kunststoffen gefertigt sind. Insbesondere kommt als Mehrkomponenten-Spritzgussverfahren ein 2-Komponenten-Spritzgussverfahren zur Anwendung. Alternativ ist es auch möglich, Anschlagselement und Grundkörper zu verkleben oder anderweitig miteinander zu verbinden. Aber insbesondere die einstückige Fertigung führt zu einer betriebssicheren und dichten Verbindung.

Ferner ist erfindungsgemäß vorgesehen, dass das einzelne Anschlagselement einen elastischen Basisbereich und zumindest einen Anschlagsbereich umfasst. Der Basisbereich ist in den Grundkörper eingebettet. Insbesondere erstreckt sich der elastische Basisbereich über die gesamte Wandstärke des Grundkörpers und durchdringt somit die gesamte Wand des Grundkörpers. Der Anschlagsbereich ragt vom Basisbereich aus nach innen in den Hohlraum. An dem Anschlagsbereich, insbesondere an den Anschlagsbereichen der mehreren Anschlagselemente, liegt das Rohr nach der Montage an.

Bevorzugt umfasst der Anschlag mehrere am Umfang verteilte Anschlagselemente und somit mehrere am Umfang verteilte Anschlagsbereiche. Wird allerdings nur ein Anschlagselement verwendet, so erstreckt sich der Anschlagsbereich vorzugsweise nicht über den gesamten Umfang sondern nur um ein Segment, beispielsweise von 10°. Allerdings ist auch vorgesehen, dass sich der einzelne Anschlagsbereich vollumfänglich erstreckt und somit einen geschlossenen Ring darstellt.

Vorzugsweise ist vorgesehen, dass der Basisbereich einstückig mit dem Anschlagsbereich gefertigt ist. Wenn an dem einen Basisbereich mehrere Anschlagsbereiche ausgebildet sind, so sind vorzugsweise alle Anschlagsbereiche einstückig mit dem zugehörigen Basisbereich gefertigt. Basisbereich und Anschlagsbereich können aus demselben Material gefertigt sein. Alternativ ist auch vorgesehen, dass der Anschlagsbereich aus einem härteren Material gefertigt ist als der Basisbereich. Beide Bereiche können beispielsweise aus thermoplastischem Elastomer gefertigt sein. Dabei können unterschiedliche thermoplastische Elastomere verwendet werden, sodass der Anschlagsbereich härter bzw. steifer ist als der elastische Basisbereich.

Insbesondere dadurch, dass der elastische Basisbereich in den Grundkörper eingebettet ist und vorzugsweise die gesamte Wand des Grundkörpers durchdringt, ergibt sich die elastische Verformbarkeit in radialer Richtung. Bei entsprechend hoher Last auf den Anschlagsbereich kann der Basisbereich sich radial nach außen verformen.

Erfindungsgemäß ist vorgesehen, dass der Basisbereich radial außen frei liegt, sodass seine radiale elastische Verformbarkeit nicht durch den Grundkörper oder anderweitig begrenzt ist. Insbesondere ist der Basisbereich an seiner radial äußeren Seite durch kein steifes Element begrenzt. Dadurch kann sich der Basisbereich radial nach außen ausdehnen. Eine Einfassung des Basisbereichs an seiner radial äußeren Seite mit einem steifen Material würde in ungewollter Weise die freie Beweglichkeit dieses elastischen Materials einschränken.

Der einzelne Anschlagsbereich weist vorzugsweise eine Anschlagsfläche auf. Diese Anschlagsfläche ist so angeordnet, dass sie von dem eingesteckten Rohr berührt wird. Dementsprechend weist die Anschlagsfläche zur Einstecköffnung der Rohrmuffe hin. Die Anschlagsfläche ist vorzugsweise gegenüber der Rohrmuffenachse mit einem Winkel < 90° geneigt. Der Winkel liegt vorzugsweise im Bereich von 70° bis 20°. Bei der Montage wird das Rohr bzw. das Spitzende des Rohres so weit in die Rohrmuffe eingesteckt, bis das Rohr an der Anschlagsfläche des Anschlagselements anliegt. Bei Erwärmung der Rohranordnung kommt es zur Längenausdehnung, wodurch das Rohr auf die Anschlagsfläche in axialer Richtung eine Kraft ausübt. Aufgrund der Neigung der Anschlagsfläche gegenüber der Rohrmuffenachse ergibt sich eine zur Rohrmuffenachse senkrechte Kraftkomponente. Diese senkrechte Kraftkomponente wirkt in radialer Richtung und führt zur elastischen Verformung des Anschlagselementes in radialer Richtung.

Gemäß einer bevorzugten Ausgestaltung ist der Basisbereich vollumfänglich um die Rohrmuffenachse ausgebildet. Der Basisbereich bildet somit einen geschlossenen, ringförmigen Bereich. Vorzugsweise sind an dem Basisbereich über den Umfang verteilt mehrere Anschlagsbereiche angeordnet. Der Anschlag umfasst somit insbesondere mehrere Anschlagselemente mit einem gemeinsamen Basisbereich als geschlossenen Ring. Von dem ringförmigen Basisbereich erstrecken sich am Umfang verteilt die Anschlagsbereiche der einzelnen Anschlagselemente nach innen.

In bevorzugter Ausbildung ist vorgesehen, dass der Grundkörper einen ersten steifen Ring und einen zweiten steifen Ring umfasst. Die beiden steifen Ringe sind ausschließlich über das Anschlagselement bzw. die Anschlagselemente, insbesondere über den vollumfänglich ausgebildeten Basisbereich, verbunden. Der erste Ring ist beispielsweise der steife Bestandteil des Grundkörpers, der das hintere Ende des Muffenbereichs, den Verjüngungsbereich und den Rohrbereich bildet. Der zweite Ring kann in einer Sicke das Dichtmittel aufnehmen und sich dementsprechend bis zur Einstecköffnung der Rohrmuffe erstrecken.

Alternativ ist es auch möglich, dass die Rohrmuffe einen dritten steifen Ring aufweist, wobei der zweite und der dritte steife Ring durch das ringförmige Dichtmittel miteinander verbunden sind. Bei dieser Ausgestaltung wird dann vorzugsweise nicht nur das Anschlagselement, sondern auch das Dichtmittel in einem Mehrkomponenten-Spritzgussverfahren einstückig mit dem steifen Grundkörper gefertigt.

Die Verwendung der zumindest zwei steifen Ringe, die ausschließlich über den elastischen Basisbereich des Anschlagselementes verbunden sind, hat den entscheidenden Vorteil, dass die beiden Ringe zueinander elastisch auswinkelbar sind. Insbesondere ist die Größe und Elastizität des Basisbereiches so gewählt, dass die beiden Ringe zueinander um zumindest 2°, vorzugsweise zumindest 5°, elastisch auswinkelbar sind. Diese Auswinkelbarkeit ist insbesondere bei der Montage bzw. beim Verlegen der Rohranordnung von Vorteil, da sich dadurch Bögen mit relativ kleinem Winkel bei der Verlegung einsparen lassen. Ferner ist bei der hier vorgestellten Konstruktion der Rohrmuffe die aufgrund der Auswinkelung auftretende elastische Verformung von der Dichtung entkoppelt. Im Bereich des Dichtmittels bleiben Rohrmuffe und eingestecktes Rohr parallel, da die Auswinkelung nicht im Bereich des Dichtmittels, sondern im Bereich des Anschlagselements erfolgt.

Bei der Herstellung der Rohrmuffe können als Werkstoffe vorzugsweise alle Kunststoffe verwendet werden, welche insbesondere in einem Mehrkomponentenverfahren verarbeitet werden können, wobei eine Komponente Elastomer-Eigenschaften oder zumindest elastomerähnliche Eigenschaften aufweisen soll. Bevorzugte Kunststoffe sind Polyolefine wie PP, PE etc. in Kombination mit thermoplastischen Elastomeren, da diese leicht in einem Zweikomponenten-Spritzgussverfahren verarbeitbar sind.

Die Erfindung umfasst weiter die Rohranordnung. Die Rohranordnung ist die Kombination aus der vorgestellten Rohrmuffe mit dem in die Rohrmuffe einsteckbaren Rohr. Sämtliche hier beschriebenen vorteilhaften Ausgestaltungen und Unteransprüche der Rohrmuffe finden entsprechend Anwendung auf die Rohranordnung.

Weitere Einzelheiten, Vorteile und Merkmale der vorliegenden Erfindung ergeben sich aus nachfolgender Beschreibung eines Ausführungsbeispiels anhand der Zeichnung. Es zeigen:
- Fig. 1: eine erfindungsgemäße Rohrmuffe gemäß einem Ausführungsbeispiel,
- Fig. 2: ein Detail aus Fig. 1,
- Fig. 3: eine erfindungsgemäße Rohranordnung mit der erfindungsgemäßen Rohrmuffe gemäß dem Ausführungsbeispiel nach der Montage,
- Fig. 4: die erfindungsgemäße Rohranordnung aus Fig. 3 nach erfolgter Längenausdehnung,
- Fig. 5: die erfindungsgemäße Rohranordnung mit der erfindungsgemäßen Rohrmuffe gemäß dem Ausführungsbeispiel mit alternativer Ausgestaltung des Dichtmittels, und
- Fig. 6: den in Fig. 1 gekennzeichneten Schnitt A-A.

Im Folgenden wird eine Rohrmuffe 1 als Bestandteil einer drucklosen Rohranordnung 100 im Detail erläutert. Soweit nicht anders erwähnt, wird dabei stets auf alle Figuren Bezug genommen.

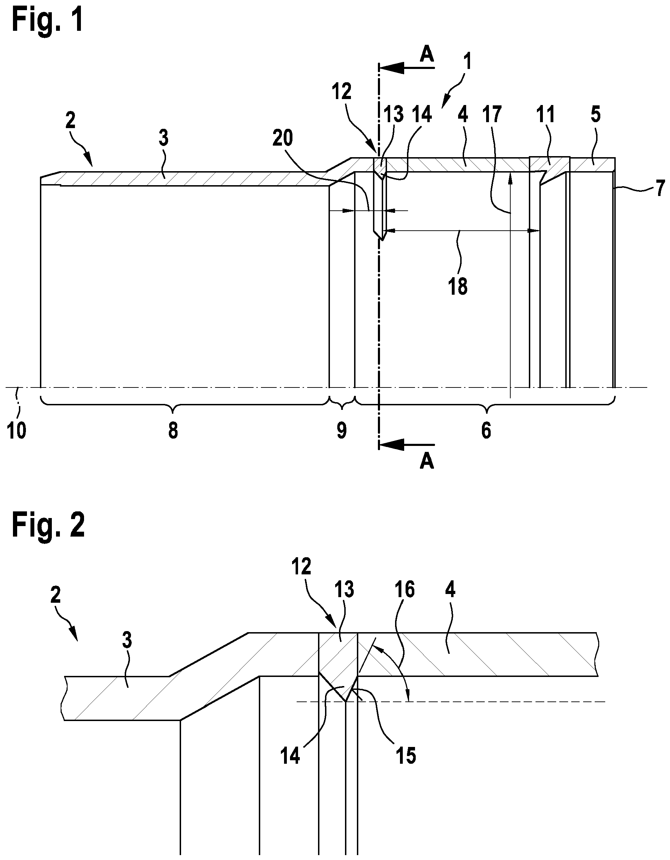

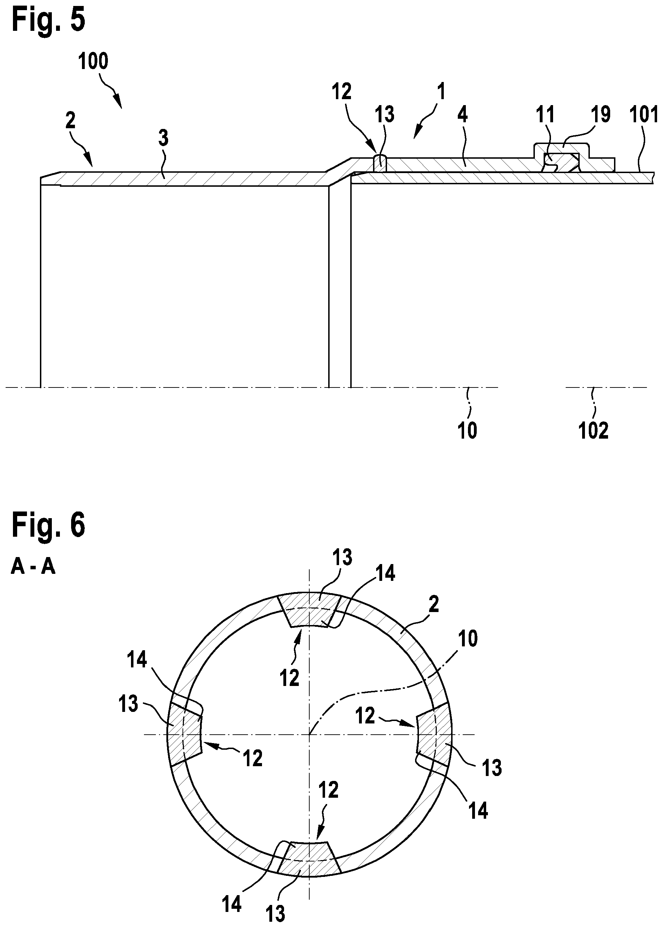

Figur 1 zeigt die Rohrmuffe 1 im Halbschnitt. Den gekennzeichneten Schnitt A-A zeigt Figur 6. Die Rohrmuffe 1 weist einen Grundkörper 2 aus steifem Kunststoff auf. Der Grundkörper 2 setzt sich aus einem ersten Ring 3, einem zweiten Ring 4 und einem dritten Ring 5 zusammen. Entsprechend der Innendurchmesser der Rohrmuffe 1 sind ein vorderer Muffenbereich 6, ein hinterer Rohrbereich 8 und ein dazwischenliegender Verjüngungsbereich 9 definiert. Der Muffenbereich 6 weist eine Einstecköffnung 7 zum Einstecken eines Rohrs 101 auf. Der Muffenbereich 6 geht über den Verjüngungsbereich 9 in den hinteren Rohrbereich 8 über.

Die Rohrmuffe 1 erstreckt sich entlang einer Rohrmuffenachse 10.

Im Muffenbereich 6 der Rohrmuffe 1 ist ein Dichtmittel 11 angeordnet. Dieses Dichtmittel 11 ist aus elastischem Material und vollständig umlaufend. Im gezeigten Beispiel verbindet das Dichtmittel 11 den zweiten Ring 4 mit dem dritten Ring 5 des Grundkörpers 2. Entsprechend sind diese beiden Ringe 4, 5 und das Dichtmittel 11 einstückig gefertigt. Das Dichtmittel 11 ragt mit seiner Dichtlippe in den durch den Grundkörper 2 gebildeten Hohlraum nach innen.

Ferner umfasst die Rohrmuffe 1 einen Anschlag mit mehreren Anschlagselementen 12. Im gezeigten Beispiel sind gemäß Figur 6 vier Anschlagselemente 12 am Umfang verteilt. Das einzelne Anschlagselement 12 setzt sich aus einem Basisbereich 13 und einem Anschlagsbereich 14 zusammen.

Im gezeigten Beispiel hat jedes Anschlagselement 12 einen eigenen Basisbereich 13. Alternativ kann sich auch ein gemeinsamer Basisbereich 13 vollumfänglich um die Rohrmuffenachse 10 erstrecken.

Der Basisbereich 13 ist aus einem elastischen Kunststoff gebildet und einstückig mit dem ersten Ring 3 und dem zweiten Ring 4 gefertigt. Dementsprechend ist der jeweilige Basisbereich 13 in den Grundkörper 2 eingebettet.

Radial außen ist der Basisbereich 13 durch nichts begrenzt, sodass er sich radial nach außen frei verformen kann.

Die einzelnen Anschlagselemente 12 und somit die einzelnen Anschlagsbereiche 14 sind entlang des Umfangs verteilt und bilden keinen geschlossenen Ring, sondern einzelne, nach innen ragende Bereiche.

Der einzelne Anschlagsbereich 14 weist eine Anschlagsfläche 15 auf. Wie die Detaildarstellung in Figur 2 zeigt, ist die Anschlagsfläche 15 mit einem Winkel 16 gegenüber der Rohrmuffenachse 10 geneigt.

Figur 1 zeigt einen Innendurchmesser 17 des Grundkörpers 2 im Muffenbereich 6. Ferner gezeigt ist ein Abstand 18 zwischen den radial innersten Punkten des Dichtmittels 11 und des Anschlagselements 12. Ein weiterer Abstand 20 ist vom radial innersten Punkt des Anschlagselementes 12 bis zum Beginn des Verjüngungsbereichs 9 definiert. Bei Längenausdehnung kann sich das Rohr 101 zumindest um diesen weiteren Abstand 20 noch zusätzlich in die Rohrmuffe 1 schieben.

Unabhängig von der hier gezeigten, konkreten Ausgestaltung des Ausführungsbeispiels sind folgende Werte vorgesehen: Der Abstand 18 beträgt vorzugweise Aₘᵢₙ, der Mindestmuffenlänge hinter der Sicke, wie z.B. in der Norm EN1451-1 (Tabelle 6 und Bild 3) definiert. Der weitere Abstand 20 beträgt vorzugsweise zumindest 2 %, insbesondere zumindest 6%, des Innendurchmessers 17, abhängig vom Längenausdehnungskoeffizienten des Rohrsystems.

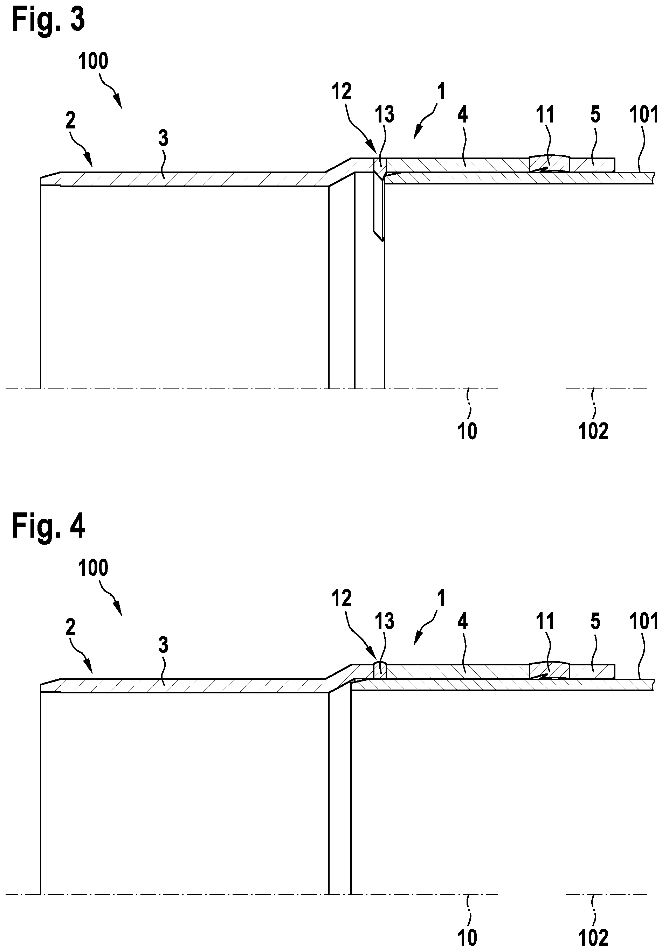

Figur 3 zeigt die drucklose Rohranordnung 100 mit Rohrmuffe 1 und eingestecktem Rohr 101. Bei dem gezeigten Zustand liegt das Spitzende des Rohrs 101 an den Anschlagselementen 12 an.

Die Elastizität der Anschlagselemente 12 ist hier so gewählt, dass der gewünschte Verlegewiderstand erreicht wird. Der Anschlag ist beispielsweise so ausgebildet, dass bei üblicher Montagekraft auf das Rohr 101 die Einstecktiefe durch die Anschlagselemente 12 begrenzt werden. Erst bei deutlich höherer Last, wie sie insbesondere aufgrund thermischer Längenausdehnung auftritt, kommt es zur radialen Verformung der Anschlagselemente 12. Dies ist in Figur 4 dargestellt. Aufgrund dieser elastischen Verformung der Anschlagselemente 12 kann das Rohr 101 über den Anschlag hinaus weiter in die Rohrmuffe 1 eingesteckt werden. Figur 4 verdeutlicht auch, dass der Basisbereich 13 radial außen nicht begrenzt ist, sodass er sich frei radial nach außen verformen kann.

Figur 5 verdeutlicht, dass in einer alternativen Ausgestaltung der Rohrmuffe 1 das Dichtmittel 11 auch in einer Sicke 19 des Grundkörpers 2 angeordnet werden kann. Dementsprechend sind nur zwei Ringe 3, 4 vorgesehen. Die Sicke 19 mit dem Dichtmittel 11 ist im zweiten Ring 4 angeordnet.

Die Darstellung der Rohranordnung 100 mit der Rohrmuffenachse 10 und der Rohrachse 102 verdeutlicht die Auswinkelbarkeit der Anordnung - wie dies im allgemeinen Teil der Beschreibung erläutert wurde. Im Grundzustand sind die beiden Achsen 10, 102 koaxial ausgerichtet. Bei einer durchgängigen elastischen Verbindung der beiden Ringe 3, 4 über einen elastischen ringförmigen Basisbereich 13 ist es jedoch möglich, dass die beiden Ringe 3, 4 und somit auch das Rohr 101 relativ zum ersten Ring 3 auswinkelbar sind. Dabei kommt es zu einem Winkel von beispielsweise bis zu 5° zwischen den beiden Achsen 10, 102, wobei die koaxiale Ausrichtung der beiden Achsen 10, 102 als Winkel von 0° angesehen wird.

Neben der vorstehenden schriftlichen Beschreibung der Erfindung wird zu deren ergänzender Offenbarung hiermit explizit auf die zeichnerische Darstellung der Erfindung in den Figuren Bezug genommen.

### Bezugszeichenliste

- 1: Rohrmuffe
- 2: Grundkörper
- 3: erster Ring
- 4: zweiter Ring
- 5: dritter Ring
- 6: Muffenbereich
- 7: Einstecköffnung
- 8: Rohrbereich
- 9: Verjüngungsbereich
- 10: Rohrmuffenachse
- 11: Dichtmittel
- 12: Anschlagselemente
- 13: Basisbereich
- 14: Anschlagsbereiche
- 15: Anschlagsflächen
- 16: Winkel
- 17: Innendurchmesser
- 18: Abstand
- 19: Sicke
- 20: weiterer Abstand
- 100: drucklose Rohranordnung
- 101: Rohr
- 102: Rohrachse

## Patentansprüche

1. Rohrmuffe (1), insbesondere einer drucklosen Rohranordnung (100), umfassend
• einen Grundkörper (2), der einen zylindrischen Hohlraum bildet,
• ein ringförmiges Dichtmittel (11), das vom Grundkörper (2) in den Hohlraum ragt,
• und einen Anschlag mit zumindest einem elastischen Anschlagselement (12), das vom Grundkörper (2) in den Hohlraum ragt,
• wobei der Hohlraum zum Einstecken eines Rohrs (101) durch das Dichtmittel (11) hindurch bis zum Anliegen am zumindest einen Anschlagselement (12) ausgebildet ist,
• wobei das zumindest eine Anschlagselement (12) im unverformten Zustand eine Einstecktiefe des Rohrs (101) begrenzt und im elastisch verformten Zustand die Einstecktiefe nicht begrenzt,
• und wobei das zumindest eine Anschlagselement (12) mittels axialer Last auf das Anschlagselement (12) radial nach außen elastisch verformbar ist,
**dadurch gekennzeichnet, dass**
• das zumindest eine Anschlagselement (12) einen elastischen Basisbereich (13) und zumindest einen Anschlagsbereich (14) umfasst, wobei der Basisbereich (13) in den Grundkörper (2) eingebettet ist und der Anschlagsbereich (14) vom Basisbereich (13) nach innen in den Hohlraum ragt, und
• der Basisbereich (13) radial außen frei liegt, sodass seine radiale elastische Verformbarkeit nicht begrenzt ist.

2. Rohrmuffe nach Anspruch 1, wobei der Anschlag mehrere der Anschlagselemente (12) umfasst, die entlang des Umfangs der Rohrmuffe (1) verteilt angeordnet sind.

3. Rohrmuffe nach einem der vorhergehenden Ansprüche, wobei das zumindest eine Anschlagselement (12) einstückig mit dem Grundkörper (2), vorzugsweise in einem Mehrkomponentenspritzgussverfahren, gefertigt ist.

4. Rohrmuffe nach einem der vorhergehenden Ansprüche, wobei der Basisbereich (13) einstückig mit dem Anschlagsbereich (14) gefertigt ist, wobei Basisbereich (13) und Anschlagsbereich (14) aus demselben Material gefertigt sind oder der Anschlagsbereich (14) aus einem härteren Material gefertigt ist als der Basisbereich (13).

5. Rohrmuffe nach einem der vorhergehenden Ansprüche, wobei der Anschlagsbereich (14) eine zur Berührung mit dem Rohr (101) angeordnete Anschlagsfläche (15) aufweist, wobei die Anschlagsfläche (15) zur Rohrmuffenachse (10) mit einem Winkel kleiner 90° geneigt ist.

6. Rohrmuffe nach einem der vorhergehenden Ansprüche, wobei am Basisbereich (13) mehrere Anschlagsbereiche (14) angeordnet sind.

7. Rohrmuffe nach einem der vorhergehenden Ansprüche, wobei sich der Basisbereich (13) vollumfänglich um die Rohrmuffenachse (10) erstreckt.

8. Rohrmuffe nach einem der vorhergehenden Ansprüche, wobei der Grundkörper (2) einen steifen ersten Ring (3) und einen steifen zweiten Ring (4) umfasst, wobei die beiden Ringe (3, 4) ausschließlich über das Anschlagselement (12), insbesondere über den Basisbereich (13), verbunden sind.

9. Rohrmuffe nach Anspruch 8, wobei die beiden Ringe (3, 4) zueinander um zumindest 2°, vorzugsweise zumindest 5°, elastisch auswinkelbar sind.

10. Rohranordnung (100) umfassend eine Rohrmuffe (1) nach einem der vorhergehenden Ansprüche und ein in die Rohrmuffe (1) einsteckbares Rohr (101).

11. Rohranordnung (100) nach Anspruch 10, die dazu ausgebildet ist, dass das Dichtmittel (11) beim Einstecken des Rohrs (101) in die Rohrmuffe (1) mit einer axialen Kraft F1 überwindbar ist und dass der Anschlag mit einer axialen Kraft F2 überwindbar ist, wobei F2 größer ist als F1, vorzugsweise F2 zumindest 1,2*F1 beträgt.

## Claims

1. A pipe sleeve (1), in particular of a pressureless pipe arrangement (100), comprising
- a base body (2), which forms a cylindrical cavity,
- an annular sealing means (11) projecting from the base body (2) into the cavity,
- and a stopper with at least one elastic stop element (12) projecting from the base body (2) into the cavity,
- wherein the cavity is formed for inserting of a pipe (101) through the sealing means (11) until abutting the at least one stop element (12),
- wherein the at least one stop element (12) limits an insertion depth of the pipe (101) in the undeformed state and does not limit the insertion depth in the elastically deformed state,
- and wherein the at least one stop element (12) is elastically deformable radially outwardly by means of axial load on the stop element (12),
**characterised in that**
- the at least one stop element (12) comprises an elastic base portion (13) and at least one stop portion (14), wherein the base portion (13) is embedded in the base body (2) and the stop portion (14) projects inwardly from the base portion (13) into the cavity, and
- the base portion (13) is radially outwardly exposed, so that its radial elastic deformability is not limited.

2. The pipe sleeve according to claim 1, wherein the stopper comprises multiple of the stopper elements (12), which are disposed distributedly along the circumference of the pipe sleeve (1).

3. The pipe sleeve according to one of the preceding claims, wherein the at least one stop element (12) is produced integrally with the base body (2), preferably in a multicomponent injection moulding process.

4. The pipe sleeve according to one of the preceding claims, wherein the base portion (13) is produced integrally with the stop portion (14), wherein the base portion (13) and the stop portion (14) are made of the same material or the stop portion (14) is made of a harder material than the base portion (13).

5. The pipe socket according to one of the preceding claims, wherein the stop portion (14) comprises a stop surface (15) disposed for contacting the pipe (101), wherein the stop surface (15) is inclined to the pipe socket axis (10) with an angle smaller than 90°.

6. The pipe sleeve according to one of the preceding claims, wherein a plurality of stop portions (14) are disposed at the base portion (13).

7. The pipe socket according to one of the preceding claims, wherein the base portion (13) extends completely around the pipe socket axis (10).

8. The pipe sleeve according to one of the preceding claims, wherein the base body (2) comprises a rigid first ring (3) and a rigid second ring (4), wherein the two rings (3, 4) are connected exclusively via the stop element (12), in particular via the base portion (13).

9. The pipe sleeve according to claim 8, wherein the two rings (3, 4) are elastically angled relative to each other by at least 2°, preferably at least 5°.

10. A pipe arrangement (100) comprising a pipe sleeve (1) according to one of the preceding claims and a pipe (101) insertable into the pipe sleeve (1).

11. The pipe arrangement (100) according to claim 10, which is arranged, so that the sealing means (11) can be overcome with an axial force F1, when the pipe (101) is inserted into the pipe socket (1) and so that the stopper can be overcome with an axial force F2, wherein F2 is greater than F1, preferably F2 is at least 1.2*F1.

## Revendications

1. Manchon tubulaire (1), en particulier d'un ensemble de tuyau sans pression (100), comprenant
• un corps de base (2), qui forme une cavité cylindrique,
• un moyen d'étanchéité (11) annulaire, qui fait saillie du corps de base (2) dans la cavité,
• et une butée avec au moins un élément de butée (12) élastique, qui fait saillie du corps de base (2) dans la cavité,
• dans lequel la cavité est réalisée pour l'introduction d'un tuyau (101) à travers le moyen d'étanchéité (11) jusqu'à ce qu'il vienne s'appliquer contre le au moins un élément de butée (12),
• dans lequel le au moins un élément de butée (12) dans l'état non déformé limite une profondeur d'introduction du tuyau (101) et dans l'état déformé élastiquement ne limite pas la profondeur d'introduction,
• et dans lequel le au moins un élément de butée (12) est déformable élastiquement radialement vers l'extérieur au moyen d'une charge axiale sur l'élément de butée (12),
**caractérisé en ce que**
• le au moins un élément de butée (12) comprend une zone de base (13) élastique et au moins une zone de butée (14), dans lequel la zone de base (13) est intégrée dans le corps de base (2) et la zone de butée (14) fait saillie de la zone de base (13) vers l'intérieur dans la cavité, et
• la zone de base (13) est mise à découvert radialement vers l'extérieur, de sorte que sa déformabilité élastique radiale n'est pas limitée.

2. Manchon tubulaire selon la revendication 1, dans lequel la butée comprend plusieurs des éléments de butée (12) qui sont disposés de manière répartie le long de la périphérie du manchon tubulaire (1).

3. Manchon tubulaire selon l'une quelconque des revendications précédentes, dans lequel le au moins un élément de butée (12) est fabriqué d'une seule pièce avec le corps de base (2), de préférence dans un procédé de moulage par injection à plusieurs composants.

4. Manchon tubulaire selon l'une quelconque des revendications précédentes, dans lequel la zone de base (13) est fabriquée d'une seule pièce avec la zone de butée (14), dans lequel les zone de base (13) et zone de butée (14) sont fabriquées à partir du même matériau ou la zone de butée (14) est fabriquée à partir d'un matériau plus dur que la zone de base (13).

5. Manchon tubulaire selon l'une quelconque des revendications précédentes, dans lequel la zone de butée (14) présente une surface de butée (15) disposée pour être en contact avec le tuyau (101), dans lequel la surface de butée (15) est inclinée avec un angle inférieur à 90° par rapport à l'axe de manchon tubulaire (10).

6. Manchon tubulaire selon l'une quelconque des revendications précédentes, dans lequel plusieurs zones de butée (14) sont disposées sur la zone de base (13).

7. Manchon tubulaire selon l'une quelconque des revendications précédentes, dans lequel la zone de base (13) s'étend entièrement autour de l'axe de manchon tubulaire (10).

8. Manchon tubulaire selon l'une quelconque des revendications précédentes, dans lequel le corps de base (2) comprend une première bague rigide (3) et une deuxième bague rigide (4), dans lequel les deux bagues (3, 4) sont reliées exclusivement par l'intermédiaire de l'élément de butée (12), en particulier par l'intermédiaire de la zone de base (13).

9. Manchon tubulaire selon la revendication 8, dans lequel les deux bagues (3, 4) peuvent être pliées de manière élastique l'une par rapport à l'autre d'au moins 2°, de préférence d'au moins 5°.

10. Ensemble de tuyau (100) comprenant un manchon tubulaire (1) selon l'une quelconque des revendications précédentes et un tuyau (101) pouvant être introduit dans le manchon tubulaire (1).

11. Ensemble de tuyau (100) selon la revendication 10, qui est réalisé pour que le moyen d'étanchéité (11) lors de l'introduction du tuyau (101) dans le manchon tubulaire (1) puisse être passé avec une force axiale F1 et que la butée puisse être passée avec une force axiale F2, dans lequel F2 est supérieure à F1, de préférence F2 est égale au moins à 1,2*F1.
